# EUROPEAN PATENT APPLICATION

(11) **EP 4 844 451 A1**
(43) Date of publication of application: **25.11.2026**
(21) Application number: 26181088.1
(22) Date of filing: 26.05.2026
(51) Int. Cl.: G01V 1/22, G01D 5/353

(54) **REAL-TIME DISTRIBUTED SENSING TECHNOLOGY SYSTEM**

(30) Priority: 23.05.2025 US 202563810903 P
(71) Applicant: Services Pétroliers Schlumberger, 75007 Paris (FR); GeoQuest Systems B.V., 2514 JG The Hague (NL)
(72) Inventor: LEE, Ming Xiang, Houston, 77042 (US); LAWRENCE, Edwin, Houston, 77042 (US); ABRARRIADI, Houston, 77042 (US); TAN, Chee Seong, Houston, 77042 (US); MUNIANDY, Satyaraj, Houston, 77042 (US)
(74) Representative: Schlumberger Intellectual Property Department

(57) **Abstract**

A method can include receiving distributed sensing technology data acquired at a field site using one or more fiber optic cables in a subsurface environment; converting the distributed sensing technology data to image data; and transmitting the image data via a network interface to a network destination remote from the field site.

## Description

### RELATED APPLICATION

This application claims priority to and the benefit of a US Provisional Application having Serial No. 63/810,903, filed on 23 May 2025, which is incorporated by reference herein in its entirety.

### BACKGROUND

Distributed sensing technology can utilize a fiber optic cable to sense one or more types of physical phenomena such as, for example, acoustic energy, heat energy, etc. Such technology may provide for a relatively high sampling rate (e.g., operational frequency) such that relatively large amounts of data are generated with respect to time. The size of such data may also depend on length of a fiber optic cable where a longer cable may result in an increase in amount of data. In various instances, a fiber optic cable may be disposed in a well, which may extend more than 100 meters into a subsurface environment. Where such a well is at a remote site, which may be rarely visited by humans, a demand for data transmission can exist. However, given the remoteness of a site, infrastructure capable of providing reasonable data transmission rates (e.g., bandwidth) may be lacking. Hence, technical issues exist as to how to receive and assess such data, which may be imperative for proper decision making as to field operations at the site. As an example, a system may provide a technological solution to such a technological problem, for example, by using field equipment that can be operated using one or more techniques to reduce data transmission demands.

### SUMMARY

A method can include receiving distributed sensing technology data acquired at a field site using one or more fiber optic cables in a subsurface environment; converting the distributed sensing technology data to image data; and transmitting the image data via a network interface to a network destination remote from the field site. A system can include a processor; a memory accessible to the processor; and processor-executable instructions stored in the memory to instruct the system to: receive distributed sensing technology data acquired at a field site using one or more fiber optic cables in a subsurface environment; convert the distributed sensing technology data to image data; and transmit the image data via a network interface to a network destination remote from the field site. One or more computer-readable storage media can include processor-executable instructions to instruct a wellsite computing system to: receive distributed sensing technology data acquired at a field site using one or more fiber optic cables in a subsurface environment; convert the distributed sensing technology data to image data; and transmit the image data via a network interface to a network destination remote from the field site. Various other apparatuses, systems, methods, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Features and advantages of the described implementations can be more readily understood by reference to the following description taken in conjunction with the accompanying drawings.
**FIG. 1** illustrates an example system that includes various framework components associated with one or more geologic environments;
**FIG. 2** illustrates examples of equipment, an example of a network and an example of a system;
**FIG. 3** illustrates an example of a system;
**FIG. 4** illustrates an example of a system;
**FIG. 5** illustrates an example of a system;
**FIG. 6** illustrates an example of a graphical user interface;
**FIG. 7** illustrates an example of a workflow;
**FIG. 8** illustrates an example of a machine learning model;
**FIG. 9** illustrates an example of a method and an example of a system; and
**FIG. 10** illustrates examples of computer and network equipment.

### DETAILED DESCRIPTION

This description is not to be taken in a limiting sense, but rather is made merely for the purpose of describing the general principles of the implementations. The scope of the described implementations should be ascertained with reference to the issued claims.

### Example System

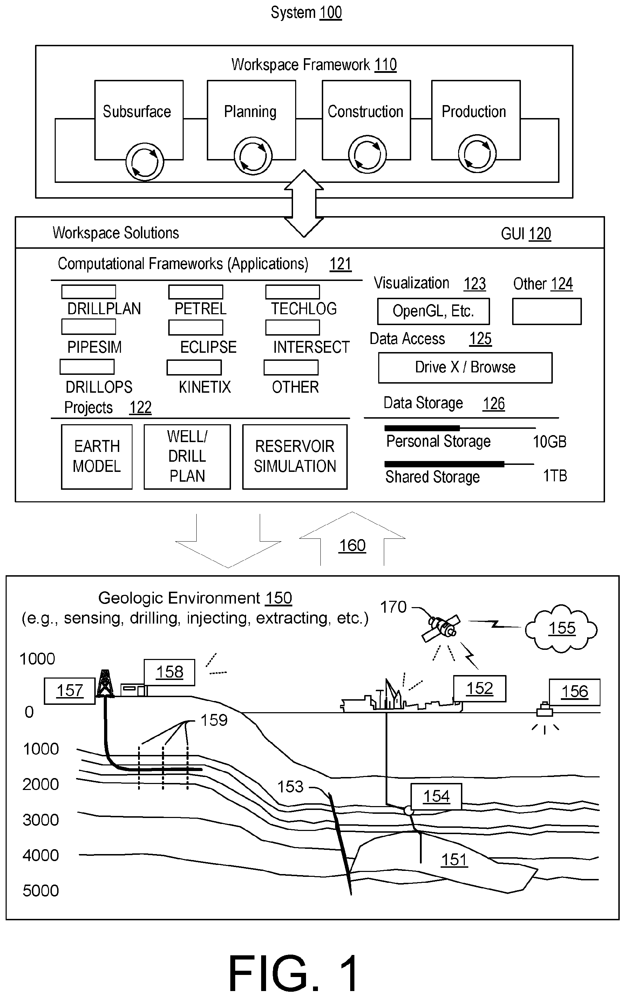

**FIG. 1** shows an example of a system 100 that includes a workspace framework 110 that can provide for instantiation of, rendering of, interactions with, etc., a graphical user interface (GUI) 120. In the example of **FIG. 1****,** the GUI 120 can include graphical controls for computational frameworks (e.g., applications) 121, projects 122, visualization 123, one or more other features 124, data access 125, and data storage 126.

In the example of **FIG. 1****,** the workspace framework 110 may be tailored to a particular geologic environment such as an example geologic environment 150. For example, the geologic environment 150 may include layers (e.g., stratification) that include a reservoir 151 and that may be intersected by a fault 153. As an example, the geologic environment 150 may be outfitted with a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a wellsite and include sensing, detecting, emitting or other circuitry. Such equipment may include storage and communication circuitry to store and to communicate data, instructions, etc. As an example, one or more satellites may be provided for purposes of communications, data acquisition, etc. For example, **FIG.** 1 shows a satellite 170 in communication with the network 155 that may be configured for communications, noting that the satellite 170 may additionally or alternatively include circuitry for imagery (e.g., spatial, spectral, temporal, radiometric, etc.).

**FIG. 1** also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

In the example of **FIG. 1****,** the GUI 120 shows some examples of computational frameworks, including the DRILLPLAN, PETREL, TECHLOG, PIPESIM, ECLIPSE, INTERSECT, DRILLOPS, and KINETIX frameworks (SLB, Houston, Texas), noting that one or more other frameworks may be utilized, additionally or alternatively.

The DRILLPLAN framework provides for digital well construction planning and includes features for automation of repetitive tasks and validation workflows, enabling improved quality drilling programs (e.g., digital drilling plans, etc.) to be produced quickly with assured coherency.

The DRILLOPS framework, which may be included in the system 100 of **FIG. 1****,** may execute a digital drilling plan and ensure plan adherence, while delivering goal-based automation. The DRILLOPS framework may generate activity plans automatically individual operations, whether they are monitored and/or controlled on the rig or in town. Automation may utilize data analysis and learning systems to assist and optimize tasks, such as, for example, setting ROP to drilling a stand. A preset menu of automatable drilling tasks may be rendered, and, using data analysis and models, a plan may be executed in a manner to achieve a specified goal, where, for example, measurements may be utilized for calibration. The DRILLOPS framework provides flexibility to modify and replan activities dynamically, for example, based on a live appraisal of various factors (e.g., equipment, personnel, and supplies). Well construction activities (e.g., tripping, drilling, cementing, etc.) may be continually monitored and dynamically updated using feedback from operational activities. The DRILLOPS framework may provide for various levels of automation based on planning and/or re-planning (e.g., via the DRILLPLAN framework), feedback, etc.

The PETREL framework can be part of the DELFI cognitive exploration and production (E&P) environment (SLB, Houston, Texas, referred to as the DELFI environment) for utilization in geosciences and geoengineering, for example, to analyze subsurface data from exploration to production of fluid from a reservoir.

One or more types of frameworks may be implemented within or in a manner operatively coupled to the DELFI environment, which is a secure, cognitive, cloud-based collaborative environment that integrates data and workflows with digital technologies, such as artificial intelligence (AI) and machine learning (ML). As an example, such an environment can provide for operations that involve one or more frameworks. The DELFI environment may be referred to as the DELFI framework, which may be a framework of frameworks. As an example, the DELFI environment can include various other frameworks, which can include, for example, one or more types of models (e.g., simulation models, etc.).

The TECHLOG framework can handle and process field and laboratory data for a variety of geologic environments (e.g., deepwater exploration, shale, etc.). The TECHLOG framework can structure wellbore data for analyses, planning, etc.

The PIPESIM simulator includes solvers that may provide simulation results such as, for example, multiphase flow results (e.g., from a reservoir to a wellhead and beyond, etc.), flowline and surface facility performance, etc. The PIPESIM simulator may be integrated, for example, with the AVOCET production operations framework (SLB, Houston Texas). As an example, a reservoir or reservoirs may be simulated with respect to one or more enhanced recovery techniques (e.g., consider a thermal process such as steam-assisted gravity drainage (SAGD), etc.). As an example, the PIPESIM simulator may be an optimizer that can optimize one or more operational scenarios at least in part via simulation of physical phenomena.

The ECLIPSE framework provides a reservoir simulator (e.g., as a computational framework) with numerical solutions for fast and accurate prediction of dynamic behavior for various types of reservoirs and development schemes.

The INTERSECT framework provides a high-resolution reservoir simulator for simulation of detailed geological features and quantification of uncertainties, for example, by creating accurate production scenarios and, with the integration of precise models of the surface facilities and field operations, the INTERSECT framework can produce reliable results, which may be continuously updated by real-time data exchanges (e.g., from one or more types of data acquisition equipment in the field that can acquire data during one or more types of field operations, etc.). The INTERSECT framework, as with the other example frameworks, may be utilized as part of the DELFI cognitive E&P environment, for example, for rapid simulation of multiple concurrent cases. For example, a workflow may utilize one or more of the DELFI on demand reservoir simulation features.

The KINETIX framework provides for reservoir-centric stimulation-to-production analyses that can integrate geology, petrophysics, completion engineering, reservoir engineering, and geomechanics, for example, to provide for optimized completion and fracturing designs for a well, a pad, or a field. The KINETIX framework can be operatively coupled to and/or integrated with features of the PETREL framework (e.g., within the DELFI environment).

The aforementioned DELFI environment provides various features for workflows as to subsurface analysis, planning, construction and production, for example, as illustrated in the workspace framework 110. As shown in **FIG. 1****,** outputs from the workspace framework 110 can be utilized for directing, controlling, etc., one or more processes in the geologic environment 150 and, feedback 160, can be received via one or more interfaces in one or more forms (e.g., acquired data as to operational conditions, equipment conditions, environment conditions, etc.). While several simulators are illustrated in the example of **FIG. 1****,** one or more other simulators may be utilized, additionally or alternatively.

As an example, a platform, such as, for example, the LUMI platform (SLB, Houston, Texas) may be utilized. The LUMI platform includes features that provide for artificial intelligence solutions as may be integrated with data management capabilities. The LUMI platform provides for flexible deployment options and an open, secure, and modular architecture, for example, to empower data-driven decision-making. The LUMI platform is operable with the DELFI environment and, hence, one or more of various frameworks. While various platforms, environments, frameworks, libraries, etc., are mentioned, a framework may be operable in an agnostic manner, for example, to be compatible with one or more other platforms, environments, frameworks, libraries, technologies, etc.

In the example of **FIG. 1****,** the visualization features 123 may be implemented via the workspace framework 110, for example, to perform tasks as associated with one or more of subsurface regions, planning operations, constructing wells and/or surface fluid networks, injecting fluid into a reservoir, and producing fluid from a reservoir.

### Example Geologic Environment

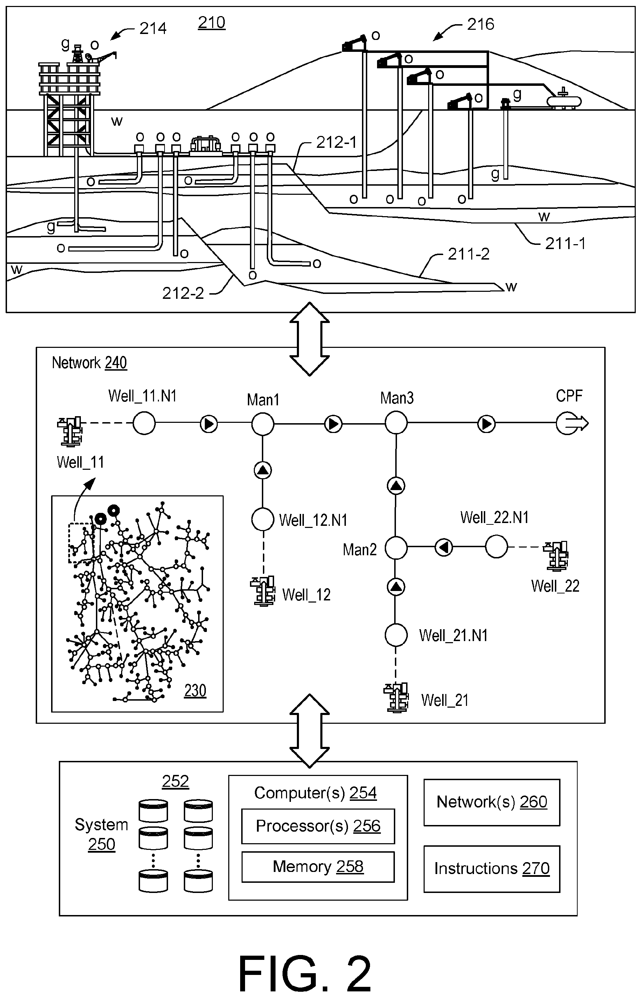

**FIG. 2** shows an example of a geologic environment 210 that includes reservoirs 211-1 and 211-2, which may be faulted by faults 212-1 and 212-2, an example of a network of equipment 230, an enlarged view of a portion of the network of equipment 230, referred to as network 240, and an example of a system 250. **FIG. 2** shows some examples of offshore equipment 214 for oil and gas operations related to the reservoir 211-2 and onshore equipment 216 for oil and gas operations related to the reservoir 211-1. In the example of Fig 2, the geologic environment 210 can include fluids such as oil (o), water (w) and gas (g), which may be stratified in the reservoirs 211-1 and 211-2.

In the example of **FIG. 2****,** the equipment 214 and 216 can include one or more of drilling equipment, wireline equipment, production equipment, etc. For example, consider the equipment 214 as including a drilling rig that can drill into a formation to reach a reservoir target where a well can be completed for production of hydrocarbons. As an example, the equipment 216 can include production equipment such as wellheads, valves, pump equipment, gas handling equipment, etc. As an example, one or more features of the system 100 of **FIG. 1** may be utilized for operations in the geologic environment 210. For example, consider utilizing a drilling or well plan framework, a drilling execution framework, a production framework, etc., to plan, execute, etc., one or more drilling operations, production operations, etc.

In **FIG. 2****,** the network 240 can be an example of a relatively small production system network. As shown, the network 240 forms somewhat of a tree like structure where flowlines represent branches (e.g., segments) and junctions represent nodes. As shown in **FIG. 2****,** the network 240 provides for transportation of fluid (e.g., oil, water and/or gas) from well locations along flowlines interconnected at junctions with final delivery at a central processing facility (CPF). Where fluid includes solids (e.g., sand, etc.), one or more pieces of equipment may provide for solids removal, collection, etc.

In the example of **FIG. 2****,** various portions of the network 240 may include conduit. For example, consider a perspective view of a geologic environment that includes two conduits which may be a conduit to Man1 and a conduit to Man3 in the network 240, where Man1, Man2 and Man3 are manifolds.

As shown in **FIG. 2****,** the example system 250 includes one or more information storage devices 252, one or more computers 254, one or more networks 260 and instructions 270 (e.g., organized as one or more sets of instructions). As to the one or more computers 254, each computer may include one or more processors (e.g., or processing cores) 256 and a memory 258 (e.g., one or more memory devices) for storing the instructions 270 (e.g., one or more sets of instructions), for example, executable by at least one of the one or more processors.

As an example, the instructions 270 can include instructions (e.g., stored in the memory 258) executable by at least one of the one or more processors 256 to instruct the system 250 to perform various actions.

As an example, various graphics in **FIG. 2** may be part of a graphical user interface (GUI) that can be generated using executable instructions that may be executable locally and/or remotely using local and/or remote display devices (e.g., a mobile device, a workstation, etc.).

In various scenarios, one or more pumps may be utilized to inject fluid into a reservoir and/or to produce fluid from a reservoir. For example, consider artificial-lift technology that may be utilized for movement of fluid. While the term lift is utilized, various artificial-technologies may be operated in a manner to move fluid downhole or to lift fluid uphole. For example, various electric submersible pumps (ESP) may be operable in a lift-mode or in an inject-mode. As an example, an ESP may be equipped with one or more sensors, which may provide for acquisition of sensor data that may be transmitted to a surface controller. For example, consider a gauge unit that may be fit to an end of an ESP to acquire temperature, pressure, flow rate, etc., and transmit sensor data to surface via an ESP power cable and/or another cable.

While various fluids in the example of **FIG. 2** may pertain to oil and gas operations, one or more features therein may be utilized in one or more other types of field operations, which may include, for example, carbon capture and storage (CCS), geothermal energy production, hydraulic fracturing, etc.

### Example Distributed Sensing Technology (DST) System

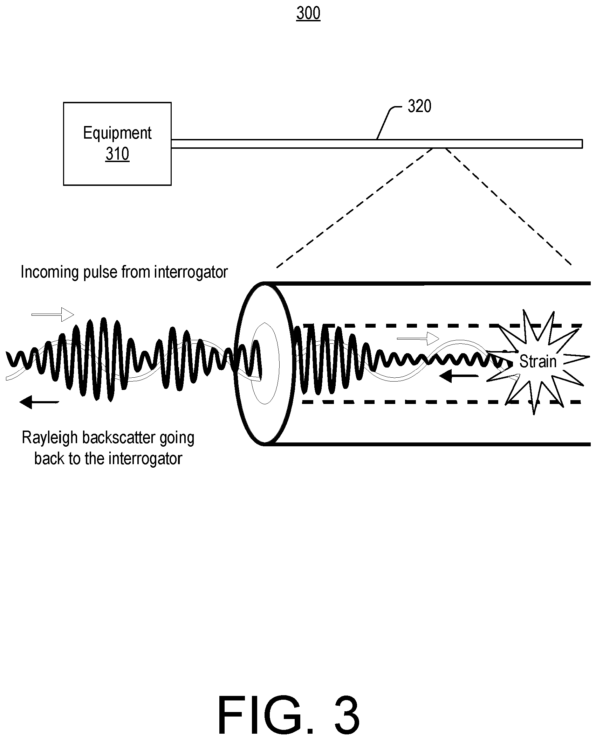

**FIG. 3** shows an example of a distributed acoustic sensing (DAS) system 300, which is an example of a type of distributed sensing technology (DST) system. As shown, the DAS system 300 includes equipment 310 and a fiber optic cable 320 operatively coupled to the equipment 310 for transmission and receipt of signals carried by the fiber optic cable 320. The DAS system 300 can utilize the fiber optic cable 320 as an acoustic sensor where the equipment 310 may be referred to as an interrogator. The equipment 310 can repeatedly send pulses of light (e.g., laser, etc.) into the fiber optic cable 320. At imperfections or variations in the fiber optic cable 320, a light pulse may be disrupted and travel in multiple directions. In such an example, some of the light may travel towards the equipment 310 where it can be processed. Such a physical phenomenon can be or involve Rayleigh backscattering. For example, consider seismic waves from ground movement (e.g., an earthquake, a seismic survey, a fracturing operation, etc.) where seismic energy of the seismic wave may deform the fiber optic cable 320 (e.g., strain the fiber optic cable 320) such that Rayleigh backscattering of light pulses in the fiber optic cable 320 occurs, which may be sensed by the equipment 310.

As an example, the equipment 310 may process signals as to phase shifting of light waves, for example, compared to transmitted light waves (e.g., light pulses). In such an approach, signals before and after deformation of the fiber optic cable 320 may be compared. For example, consider comparisons as to light wave (e.g., light pulse) amplitude, frequency, and arrival time. As an example, the equipment 310 may include circuitry that can identify or approximate one or more locations in the fiber optic cable 320 where the strain occurred and, for example, convert signal into seismic wave measurements. As an example, the DAS system 300 may acquire signals from multiple regions along the fiber optic cable 320 (or multiple cables) with respect to time, which may allow for determinations as to one or more locations of one or more sources of seismic waves (e.g., seismic energy).

The DAS system 300 may provide for acquiring signals as to one or more frequencies, durations, etc. For example, for a fiber optic cable on the seafloor, a blue whale call has a frequency of approximately 10 Hz to 40 Hz and lasts around 10 s to 30 s, whereas seismic waves due to ground movement (e.g., an earthquake) can cover a much wider frequency range and follow distinct patterns. The DAS system 300 may detect a variety of signals, which may include, for example, drilling activity, fracturing activity, seismic survey activity, ships, marine life, landslides, drainage of reservoirs, filling of reservoirs, movements of glacial ice, etc. As an example, the DAS system 300 may provide for sensing fluid flow, for example, consider sensing disruptions in fluid flow, fluid flow regimes, etc. For example, where a conduit includes a fiber optical cable disposed therein that is operatively coupled to equipment for transmission and receipt of signals, the fiber optical cable may provide for sensing a transition from laminar flow to turbulent flow and/or a transition from turbulent flow to laminar flow. As an example, flow may be characterized using the Reynolds number, a dimensionless quantity that helps predict fluid flow patterns in different situations by measuring the ratio between inertial and viscous forces (e.g., as dependent on physical fluid properties, characteristics of flow regions, etc.). As an example, flow in a boundary region at or near a cable may be detected, which may be described using one or more equations, relationships, machine learning (ML) models, etc. As an example, one or more signals from equipment, such as, for example, the DAS system 300, may be processed using one or more ML model-based techniques, with or without one or more physics-based models. As an example, one or more other flow phenomena may be detected, measured, etc. As an example, a DAS system may provide for detection, measurement, etc., of one or more other physical phenomena (e.g., corrosion, temperature, gravity effects, creep, etc.).

As explained, DAS may be utilized for one or more purposes. For example, consider low-frequency DAS (LF-DAS) and DAS microseismic. LF-DAS can be used to measure the occurrence of gradual strain perturbations due to fracture propagation during hydraulic stimulation of a well. Perturbations of strain observed in one or more nearby monitoring wells, also known as DAS strain fronts (DAS-SF), can be used to map the azimuth of hydraulic fractures and, for example, to determine a variety of far-field dimensions and properties such as frac-to-frac distances, frac-zone-domain widths, propagation speed, as well as, information about well construction effectiveness.

DAS measurements when presented in the frequency domain as a Fourier spectrum are inherently broad band and range from close to DC to tenths of kHz. Depending on the application, specific DAS bandwidths can be used. Microseismic analysis for example may make use of frequencies between 10 Hz and 500 Hz. In the case of DAS-SF, measurements make use of low frequencies (e.g., less than 1 Hz) from the returning light that corresponds to the magnitude and phase of the axial strain rate induced in the fiber.

As explained, the DAS system 300 can utilize one or more instances of the fiber optic cable 320 to sense strain distributions and changes in an environment. In such an example, the fiber optic cable 320 can operate as a sensing element where measurements are made by an optoelectronic device (e.g., the equipment 310). DAS allows strain signals to be detected over relatively large distances and in harsh environments such as in downhole in wells of unconventional plays. As explained, a fiber optic (FO) cable (e.g., optical fiber cable) may be positioned in a cement layer surrounding a casing of an observation well where the FO cable is sensitive to axial strain changes along the well.

While DAS is mentioned, as an example, a system, workflow, etc., may involve one or more other types of fiber optic-based distributed sensing or measuring. For example, consider distributed temperature sensing (DTS) and/or distributed pressure sensing. As an example, a distributed sensing technology may provide for identifying changes in well performance as they occur, enabling more accurate diagnostics on gas lift systems; helping to monitor completion integrity; and identifying a faulty valve, unstable flow, inflow, and outflow without interrupting production.

As explained, DAS technology can provide for measuring vibrations, enabling detection of seismic events and small flow changes that may otherwise be relatively difficult to capture (e.g., using DTS technology, etc.). As an example, DAS data may help in calibrating inflow profiling and distinguishing, for example, gas or solids (sand) from liquid flow.

As an example, a distributed sensing technology (DST) may employ one or more fiber optics, which may be in the form of one or more fiber optic cables operatively coupled to equipment, which can include optoelectronics for transmission and/or reception of optical waves (e.g., light waves, which may be along one or more portions of an electromagnetic spectrum, whether visible or not).

### Example Field Gateway

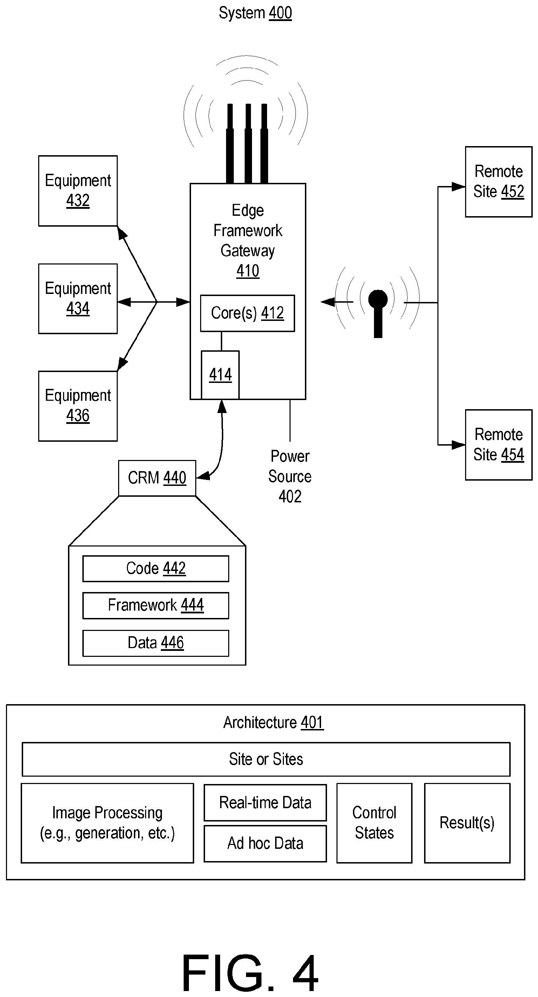

**FIG. 4** shows an example of a system 400 and an example of an architecture 401. As shown, the architecture 401 can provide for one or more workflows as to a site or sites. For example, consider a DST workflow that may involve applying one or more signal to image processing technologies, which may involve use of one or more artificial intelligence (AI) techniques, one or more ML model techniques, etc.

As an example, the architecture 401 may generate one or more results (e.g., images, characterizations, classifications, control actions, etc.) that can be utilized for operations at one or more sites. In such an example, the result or results may be generated locally and/or remotely (e.g., depending on number of sites, resources, etc.). As shown, the architecture 401 can include one or more image processing components, one or more control states components (e.g., for control decision making), etc. The architecture 401 may include one or more physics models, one or more machine learning models, etc. As shown, the architecture 401 includes an interface for real time data, optionally an interface for ad hoc data, etc. The result(s) component may include a result interface where an output result can be an image, images, a notification, an alarm, a control trigger, a control instruction, etc.

As shown, the system 400 can include a power source 402 (e.g., solar, generator, grid, a battery, etc.) that can provide power to an edge framework gateway 410 that can include one or more computing cores 412 and one or more media interfaces 414 that can, for example, receive a computer-readable medium 440 that may include one or more data structures such as code 442, a framework 444 and data 446. In such an example, the code 442 may be an operating system code that can cause one or more of the one or more cores 412 to establish an operating system environment that is suitable for execution of one or more applications. For example, the framework 444 may be an application suitable for execution in an established operating system in the edge framework gateway 410. As an example, the framework 444 may be suitable for performing tasks associated with the architecture 401. As an example, a core may be a processor core, which may be, for example, a graphics processing unit (GPU) or a GPU core. As an example, where one or more image technologies are employed, computing may be performed using one or more types of cores, which may include, for example, one or more types of GPU cores. As an example, one or more image and/or graphics processing frameworks may be implemented to facilitate image processing. For example, consider OpenGL, Vulkan, etc., noting that one or more machine learning frameworks may provide for image processing and/or GPU core utilization.

In the example of **FIG. 4****,** the edge framework gateway 410 ("EF") can include one or more types of interfaces suitable for receipt and/or transmission of information. For example, consider one or more wireless interfaces that may provide for local communications at a site such as to one or more pieces of local equipment 432, 434 and 436 and/or remote communications to one or more remote sites 452 and 454. As an example, the local equipment 432, 434 and 436 can include one or more DST systems (see, e.g., the DAS system 300 of **FIG. 3****).**

As an example, the EF 410 may be installed at a site that is some distance from a city, a town, etc. In such an example, the EF 410 may be accessible via a satellite communication network. Satellite communication tends to be slower and more costly than other types of electronic communication due to factors such as distance, equipment, deployment and maintenance. For wellsites that do not have other forms of communication, satellite communication can be limiting in one or more aspects. For example, where a controller is to operate in real-time or near real-time, a cloud-based approach to control may introduce too much latency. As shown in the example of **FIG. 4****,** the EF 410 may be deployed where it can operate locally with one or more pieces of equipment 432, 434, 436, etc., which may be for purposes of data acquisition, monitoring, control, etc. As an example, the EF 410 may operate to compress data, for example, by converting signals to images.

As desired, from time to time, communication may occur between the EF 410 and one or more remote sites 452, 454, etc., which may be via satellite communication where latency, bandwidth, and costs are tolerable. As an example, the CRM 440 may be a removable drive that can be brought to a site via one or more modes of transport. For example, consider an air drop via a drone, a human via a helicopter, plane or boat, etc.

As to an air drop, consider dropping an electronic device that can be activated locally once on the ground or while being suspended by a parachute or balloon en route to ground. Such an electronic device may communicate via a local communication system such as, for example, a local WiFi, BLUETOOTH, cellular, etc., communication system. In such an example, one or more data structures may be transferred from the electronic device (e.g., as including a CRM) to the EF 410. Such an approach can provide for local control where one or more humans may or may not be present at the site. As an example, an autonomous and/or human controllable vehicle at a site may help to locate an electronic device and help to download its payload to an EF such as the EF 410. For example, consider a local drone or land vehicle that can locate an air dropped electronic device and retrieve it and transfer one or more data structures from the electronic device to an EF, directly and/or indirectly. In such an example, the drone or land vehicle may establish communication with and/or read data from the electronic device such that data can be communicated (e.g., transferred to one or more EFs).

As an example, a system may include and/or provide access to various resources that may be part of an environment such as, for example, the DELFI environment. For example, consider the PIPESIM framework, which may be implemented locally and/or remotely (e.g., as a full and/or as a tailored framework). As an example, the PIPESIM framework and/or other framework may be utilized for one or more purposes, which may include calibration, generation of results, etc. As an example, a framework such as the PIPESIM framework may provide for comparisons between output of a semi-empirical model or models and output of the PIPESIM framework.

As an example, an EF may include a license server, a semi-empirical model(s) component, a framework simulation engine and a REST API where the REST API can receive one or more API calls, for example, as one or more model requests, calibration requests, simulation requests, etc. As an example, an EF may respond to an API call with output where such output may be provided to one or more edge applications, pieces of equipment, etc. (e.g., for individual and/or coordinated control of one or more sets of equipment, etc.).

Referring again to the architecture 401, as explained, one or more physics-based models can be deployed to an edge for implementation, for example, to operate responsive to real-time data, responsive to historical data, etc. As an example, a fluid simulation and/or a seismic simulation framework may be implemented in an edge manner. As an example, a fluid simulation framework may be a multiphase flow simulation framework suitable for handling multiphase flow that may occur in one or more types of oil and/or gas field operations and/or for handling flow of hydraulic fracturing fluid (e.g., to a formation and/or flowback from a formation). As an example, the architecture 401 may include one or more components for microseismic monitoring, which may provide for determinations as to fractures (e.g., extent, position, etc.).

As shown in **FIG. 4****,** an EF may execute within a gateway such as, for example, an AGORA gateway (e.g., consider one or more processors, memory, etc., which may be deployed as a "box" that can be locally powered and that can communicate locally with other equipment via one or more interfaces). As an example, a gateway can include one or more features of an AGORA gateway (e.g., v.202, v.402, etc.) and/or another gateway. For example, consider an INTEL ATOM E3930 or E3950 Dual Core with DRAM and an eMMC and/or SSD. Such a gateway may include a trusted platform module (TPM), which can provide for secure and measured boot support (e.g., via hashes, etc.). A gateway may include one or more interfaces (e.g., Ethernet, RS485/422, RS232, etc.). As to power, a gateway may consume less than about 100 W (e.g., consider less than 10 W or less than 20 W). As an example, a gateway may include an operating system (e.g., consider LINUX DEBIAN LTS). As an example, a gateway may include a cellular interface (e.g., 4G LTE with Global Modem / GPS, etc.). As an example, a gateway may include a WIFI interface (e.g., 802.11 a/b/g/n). As an example, a gateway may be operable using AC 100-240 V, 50/60 Hz or 24 VDC. As to dimensions, consider a gateway that has a protective box with dimensions of approximately 10 in x 8 in x 4 in.

As an example, a system may include one or more components, features, etc., of a SENSIA system (SENSIA LLC, Houston, Texas). As an example, a system may include one or more features of the QRATE HCC2 controller (SENSIA LLC), which may include a dedicated ARM microcontroller, embedded I/O, serial communications unit(s), Ethernet unit(s), one or more serial ports, one or more GPS units (e.g., consider a GNSS receiver for time synchronization), a video port (e.g., consider an HDMI port for edge application touch interface, etc.), one or more wireless option features, one or more modems (e.g., 5G, 4G LTE, WIFI, etc.), firmware, operating system, etc. As an example, such a controller may provide for running DOCKER containers (Docker, Inc, Palo Alto, California), etc. As an example, a system may include one or more processor-based components in the field, which may provide for framework execution. For example, consider a component that may provide for data acquisition, equipment control, interactions with one or more other components, etc. As an example, a field component may operate as an edge device, a gateway, etc., where, for example, one or more sites, wells, facilities, etc., may be operatively coupled to an edge device, a gateway, etc.

As an example, a gateway may be part of a drone. For example, consider a mobile gateway that can take off and land where it may land to operatively couple with equipment to thereby provide for control of such equipment. In such an example, the equipment may include a landing pad. For example, a drone may be directed to a landing pad where it can interact with equipment to control the equipment. As an example, a wellhead can include a landing pad where the wellhead can include one or more sensors (e.g., flow, temperature, pressure, seismic, etc.) and where a mobile gateway can include features for generating values using information from the one or more sensors. In such an example, the mobile gateway may issue one or more control instructions (e.g., to a choke valve, a pump, a gas lift mandrel, etc.).

As an example, a gateway may include hardware (e.g. circuitry) that can provide for operation of a drone. As an example, a gateway may be a drone controller and a controller for other equipment where the drone controller can position the gateway (e.g., via drone flight features, etc.) such that the gateway can control the other equipment.

### Example System

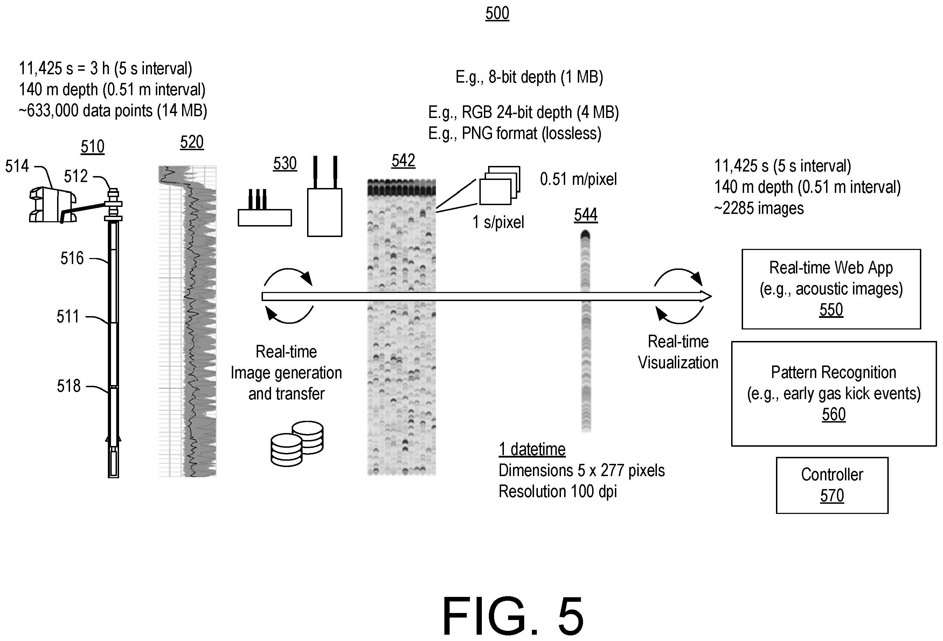

**FIG. 5** shows an example system 500 that includes various types of equipment. As shown, a wellsite 510 can include a well 511 with a wellhead assembly 512, a pump controller 514 for an electric submersible pump (ESP) 516, and one or more fiber optic cables 518 with associated equipment (e.g., optoelectronics, etc.). As shown, signals 520 from the one or more fiber optic cables 518 may be plotted as a plot of frequency band energy with respect to length of a fiber optic cable or cables. As an example, one or more local computing devices 530 may provide for receipt of the signals 520 for generation of images 542 and 544, which may be multi-dimensional or one-dimensional. As shown, the images 542 and/or 544 may be transmitted via a network or networks to a web application 550 that may provide for real-time acoustic image plotting. In such an example, pattern recognition 560 may be applied for purposes of detecting one or more types of phenomena, which may include, for example, kick events (e.g., consider early gas kick events, etc.). As shown, a controller 570 may respond to detection of one or more types of phenomena through issuance of control instructions to one or more pieces of field equipment (e.g., consider the pump controller 514, a choke valve, a gas lift valve, a hydraulic fracturing pump, etc.). The system 500 may provide for real-time acoustic data visualization and analytics and/or control where, for example, the system 500 includes components for fiber optics-to-image streaming. As mentioned, an ESP may include one or more sensors for acquisition of downhole sensor data. As an example, such data may be utilized in combination with DST system data.

In the example of **FIG. 5****,** consider 11,425 seconds of data, which is approximately 3 hours of data with 5 second intervals. In total, such data may include approximately 633,000 data points, with a size of approximately 14 MB. As indicated, one or more local computing devices 530 (e.g., a gateway, etc.) may provide for real time image generation and transfer of such data (e.g., signals 520). For example, consider utilization of an RGB 24-bit depth PNG image format for lossless compression such that the approximately 14 MB of data may be compressed to approximately 4 MB of data at a wellsite. While an RGB 24-bit depth PNG image format is mentioned, as an example, an 8-bit depth image format may be utilized to result in an even smaller data size (e.g., approximately 1 MB); noting that visual impact may be negligible and that some precision may be diminished.

In the example of **FIG. 5****,** an image may be a pixel image where, for example, a pixel may be associated with a time interval such as, for example, 1 second per pixel, and may also be associated with a spatial dimension such as, for example, 0.5102 m per pixel. Hence, a pixel may be defined in a spatial-temporal domain (e.g., one time dimension and one spatial dimension). As explained, acquired data may be for a length of a fiber optic cable such that a 140 m long fiber optic cable may generate signals with 5 second intervals such that each 5 second interval corresponds to approximately 0.51 m.

As to the images 542 and 544, these may be arrays defined by pixels. As an example, the image 544 may be an array of 5 x 277 pixels (e.g., width x height) with a resolution of approximately 100 dots per inch (dpi).

As explained, the system 500 may provide for real-time DST signal (e.g., data) to image generation, which may provide for improved event detection at a wellsite and control of field equipment at the wellsite. As explained, a system may provide for acquiring DST signals from one or more fiber optic cables and/or from one or more wells. For example, consider a system implemented at a pad with a number of wells where such wells may be fluidly coupled and/or otherwise sharing in resources (e.g., energy, lift gas, etc.).

As explained, a DAS system employs one or more fiber optic cables that act as sensors and a DAS interrogator unit that detects and captures acoustic energy surrounding environment (e.g., along a wellbore). Data captured by a DAS system includes seismic waves, acoustic waves, and strain signals. These captured data allow for analysis of geological properties and fluid movement, rock movement, and reservoir behavior based on scattered light captured by optoelectronics. A DST system can be operated as a real-time system that generates a continuous stream of data. As explained, the volume of data can be substantial and place demands on data storage and management. To handle this high volume of data, operators aim to ensure that they have adequate infrastructure in place for data storage, archiving, retrieval, and efficient data management.

As explained, a system such as, for example, the system 500 of **FIG. 5****,** can convert DST signals into image files and real-time capture of patterns for event identification and control. Such an approach to data conversion can enable operators (e.g., human and/or machine) to have a DST data representation in a visual format, making it easier to analyze and to interpret information from the signals in real-time or near real-time. As an example, to minimize bandwidth usage and latency, image data may be compressed using one or more efficient compression techniques, which may include one or more compression techniques that operate without compromising quality and integrity of visual information.

As explained, a system may provide for generation of images that can be transmitted in an intelligent manner, for example, consider a trigger-based approach that determines whether DST data absolute value differentials for a next timestep are greater than a threshold and/or a prior timestep. In such an example, bandwidth and resources may be automatically conserved. In such an approach, a threshold or thresholds may be dynamic, for example, based on one or more metrics of one or more values of one or more prior timesteps (e.g., consider a standard deviation, a percentage, etc.). As explained, a system may provide for DST snapshot conversion to image files using one or more efficient data compression techniques. As explained, a system may provide for local and/or remote near real-time pattern recognition from visual images to identify events, trigger control, etc. As an example, pattern recognition may be utilized as a type of trigger for purposes of controlling transmissions. For example, if an anomaly is detected, a trigger may be issued to call for transmission of each time interval, regardless whether a change meets a threshold, etc. Such a mode of operation may be an investigative mode that can be automatically implemented in response to detection of one or more types of events.

As an example, DAS may provide for acoustic measurements over a length of a fiber optic cable in a wellbore, for example, in the form of permanent installation (in a conduit, integrated into casing, etc.) or temporary installation (e.g., consider use of coiled tubing, slickline, etc.). A fiber optic cable may operate as an array of thousands of virtual microphones, allowing for continuous and real-time monitoring of sound or vibration along an entire length of the fiber optic cable. DST technology may be utilized in various scenarios, which may include one or more of oil and gas, geothermal wells, carbon capture and storage (CCS) wells and pipeline or infrastructure monitoring and/or control.

As an example, the THERMA framework may be utilized (SLB, Houston, Texas), which may operate in coordination with the TECHLOG framework (SLB, Houston, Texas). The THERMA framework provides for distributed temperature and distributed acoustic sensing analysis. For example, consider use by an engineer or interpreter to import DAS raw data, perform pre-processing, analyze distributed wellbore acoustic profile, and visualize a DAS profile in 2D and/or 3D. However, the large volume of data produced by a DST system can be challenging to manage and hard-to-handle due to the size of the data gathered for each interval of length for each interval of time where the raw data may be stored on an unmanned platform (e.g., at a remote location, etc.). Given the local residency of such large volumes of data, which may be at a remote location, results may involve substantial transmission and processing times where an answer product demands fiber optic expertise to interpret manually before making a decision (e.g., control, etc.).

An article by Yang et al. (2022), Real-time Φ-OTDR vibration event recognition based on image target detection, Sensors, 22(3), 1127, is incorporated by reference herein in its entirety, which applied a You Only Look Once (YOLO) technique to object detection in optical time domain reflectometer (Φ-OTDR) for multi-vibration events in real time, to reduce demands on humans.

An article by Feo et al. (2020), Distributed fiber optic sensing for real-time monitoring of gas in riser during offshore drilling, Sensors, 20(1), 267, is incorporated by reference herein in its entirety, which applied distributed fiber optic sensing for kick detection by providing real-time distributed downhole data for real-time monitoring.

An article by Bublin (2021), Event detection for distributed acoustic sensing: combining knowledge-based, classical machine learning, and deep learning approaches, Sensors, 21(22), 7527, is incorporated by reference herein in its entirety, which involves deep leaning combined with knowledge-based and classical machine learning to detect the possible intrusions to help to prevent early enough possible pipeline damage and increase cost savings due to early mitigation.

As explained with respect to the example of **FIG. 5****,** a system may implement a workflow that involves the transmission of images selectively, based on differences in value within a dataset on an upcoming timestep. Such a workflow may operate to enhance efficiency of bandwidth utilization by transferring images upon satisfaction of one or more criteria, for example, when one or more notable alterations occur in the data. Such an approach may be particularly useful when working with datasets of substantial size and where a demand exists to reduce the amount of data transferred (e.g., consider satellite transmissions, etc.). As explained, a system may be implemented at least in part using local equipment such as, for example, a gateway (e.g., a gateway device).

As an example, a system may provide for data monitoring, differential analysis, threshold determinations, image conversion triggers, image generation, selective transmissions, and processing (e.g., locally and/or remotely). For example, for data monitoring, a dataset may be continuously monitored by a system, with observations made on values at different points in time; for differential analysis, a system can conduct a comparison between current values and past values for each timestep (e.g., interval) to detect one or more notable alterations; for threshold determinations, a threshold or a criterion may be set to define a notable change, which may be determined by computing a percentage difference, absolute value change, or other applicable measure; for image conversion triggers, when a detected change above a specified threshold is indicated, a system can commence a process of turning relevant data into an image format (e.g., a picture composed of pixels as in a pixel array); for image generation, a system can transform a dataset or individual data points into a visual representation in the form of an image where such an image can have the potential to serve as a visual representation or a graphical depiction that emphasizes one or more regions that may experience or exhibit alterations; for selective transmissions, images (e.g., pixel arrays) that have noticeable changes at one or more specific time intervals can be sent via a network interface operatively coupled to a network to a receiving network interface (e.g., at a facility, in the cloud, etc.); and, for processing, a dataset may be reconstructed from one or more images, for example, with modifications being incorporated into current data. As an example, processing may be performed remotely after receipt of image data, for example, using one or more types of computing equipment. As an example, depending on local resources, one or more types of processing may be performed locally, whether on raw data and/or raw data (e.g., signals) converted to images (e.g., pixel arrays). As an example, one or more comparisons may be made between local and remote processing techniques and/or processing results.

As explained, a system may provide for selective transmission. As explained, rather than continuously streaming or transmitting data at regular intervals, a system may operate to reduce data transfer demands by providing information when it is considered reasonably necessary based on differences in values (e.g., according to one or more criteria, etc.).

As an example, a system may provide for improved bandwidth efficiency. For example, through selective transmission of images, a system can conserve bandwidth such that the system is appropriate for situations characterized by restricted or costly bandwidth.

As an example, a system may provide for improved data compression. For example, consider selective transmission of images, which may not necessarily be considered a video compression technology, it may nevertheless function as a technique for data compression by transmitting a visual depiction of alterations rather than a complete collection of data.

As an example, a system may provide for improved flexibility. For example, a system can be adaptable such that it can handle diverse datasets and use cases, allowing for adjustment of one or more criteria, etc., as may be used to determine substantial changes, based on the individual requirements of a particular application.

As to image conversion, consider an example trial where data pertain to a DAS dataset with 3 hours (11,425 seconds) with 5 seconds intervals, for a depth of 140 meters with interval sampling of 0.5102 meters. This dataset consists of approximately 633,000 data points with a data size of 14 Megabytes (MB). As explained, a system can convert these signal data points to images and transfer them into a database in real-time. As explained, a Portable Network Graphics (PNG) image format may be utilized, which provides for lossless compression compared to a format such as the Joint Photographic Experts Group (JPEG) image format. As an example, a system may compress data signals into images with a representation of a width of 1 second per pixel, and a height of 0.5102 meters per pixel. In such an example, for a single datetime, the dimensions can be 5 (width) x 277 (height) pixels with resolution of 100 dots per inch (dpi). Such images may be generated or otherwise converted into a Red Green Blue (RGB) color scale with 24-bit depth (e.g., noting that one or more other color scales may be utilized). In such an example, the system can reduce data size from 14MB to 4M (e.g., approximately 2285 images), which is approximately a 71 percent data size reduction. As an example, data size may be further reduced, for example, to approximately 1 MB, upon selection of a reduced bit-depth, for example, from 24-bit depth to 8-bit depth. In such an example, precision loss may be acceptable for initial event detection where, for example, upon detection of an event, a control instruction may provide for automatically adjusting bit depth to achieve higher precisions, as appropriate. In various instances, as to visual inspection, a reduction from 24-bit depth to 8-bit depth may be acceptable for event detection (e.g., as to computer vision, human vision, etc.). As an example, images (e.g., converted images, etc.) may be visualized in real-time locally and/or at a remote location, either of which may utilize an appropriate application. For example, consider implementation of a STREAMLIT web application (Snowflake Inc., Bozeman, Montana). STREAMLIT web applications (e.g., per the STREAMLIT platform) can be implemented using an open-source PYTHON framework, as may be suitable for data scientists and AI/ML engineers to deliver dynamic data apps with a relatively reduced amount of code (e.g., low-code apps). Such web application may provide for rapid execution and cross-platform compatibility.

As an example, a system may provide for anomaly detection using unsupervised computer vision, which may be implemented on a front-end and/or a back-end. As to a back-end implementation, a back-end may be remote from a wellsite and utilize one or more cloud platform-based resources.

As an example, a system may provide for identifying one or more types of anomaly events from one or more generated images, for example, to trigger an alert to a human and/or a machine for further action. In such an example, the system may leverage the power of one or more unsupervised techniques for such a task to reduce manual effort for data labelling and updating a model with different input data. For example, consider implementation of a Self-Supervised Transformer with Energy-based Graph Optimization (STEGO), which is an unsupervised semantic segmentation technique that can assign a number of image pixels a corresponding class label. Such an approach can provide for enabling self-supervised contrastive learning to learn intelligent representations for images without supervision or data labelling. As an example, such an approach may distill unsupervised features into relatively high quality discrete sematic labels. An article by Hamilton et al. (2022), Unsupervised Semantic Segmentation by Distilling Feature Correspondences (arXiv preprint arXiv:2203.08414) is incorporated by reference herein in its entirety.

### Example Graphical User Interface (GUI)

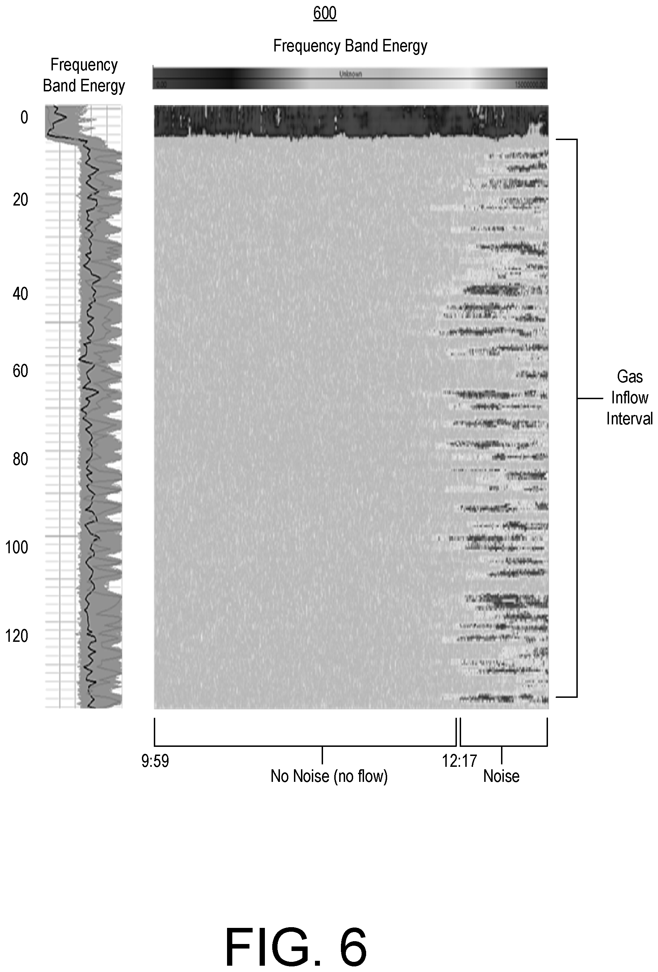

**FIG. 6** shows an example graphical user interface (GUI) 600 that includes various panes, including a depth (e.g., measured depth) pane, a frequency band energy pane, and an image pane of frequency band energy suitable for detection of one or more types of events (e.g., "no" gas flow and "loud" gas flow). The image rendered in the image pane can be a coded image, for example, consider a color image rendered according to one or more color scales, which may be adjustable as to rendering properties (e.g., contrast, saturation, etc.). As shown, the image may provide for detection of a little to no noise region and a noise region, with visually discernable noise. In such an example, "noise" may refer to actual, acoustic noise (e.g., sound). As indicated, color coding may be utilized to discern noise. For example, consider coding as to a spectrum of a characteristic of frequency band energy, etc. In the example GUI 600, the indicators as to classes of the identified regions may be from a visual examination of the image in the image pane. As explained herein, one or more machine-based techniques may be applied for purposes of detection of one or more phenomena, anomalies, etc. (e.g., consider use of one or more machine learning techniques). As an example, noise may be related to one or more flow properties, flow region characteristics, etc. As an example, a Reynolds number, or other metric, etc., may be utilized to characterize flow.

### Example Prediction Workflow

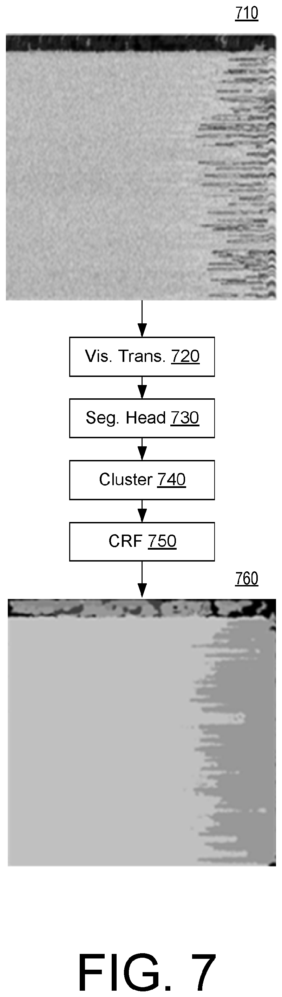

**FIG. 7** shows an example of a prediction workflow 700 that may be implemented by a system such as, for example, the system 500 of **FIG.** 5. As shown, the workflow 700 may be applied to an image 710 generated from DSA signals such as, for example, the image of the image pane in the GUI 600. As shown, the workflow 700 can include a visual transformers (ViT) block 720 that may apply one or more self-attention mechanisms to image patches, and position embeddings to generate the relevant features. An article by Vaswani et al. (2017), Attention is all you need, Advances in neural information processing systems, https://doi.org/10.48550/arXiv.1706.03762, is incorporated by reference herein in its entirety.

As shown, the workflow 700 can include a segmentation head block 730 where, for example, feature correspondences may be mapped using the segmentation head 730 such that clusters, per a clusters block 740, are generated from correlation patterns. As an example, the workflow 700 may include a Conditional Random Field (CRF) block 750 for applying post processing, for example, to refine one or more lower resolution label predictions. An article by Krahenbuhl et al. (2011), Efficient Inference in Fully Connected CRFs with Gaussian Edge Potentials, Advances in Neural Information Processing Systems, 24:109-117, is incorporated by reference herein in its entirety. As explained, the workflow 700 may be a prediction workflow that can utilize image data (e.g., a pixel image) of DAS signals as input to predict (e.g., and/or classify) one or more types of events (e.g., various anomalies, physical events, etc.).

As shown in the form of an output image 760, the workflow 700 can generate a color coded or otherwise labeled and/or coded visual representation of output from the CRF block 750 (e.g., or one or more other blocks) whereby one or more types of events may be indicated, for consumption by a human and/or a machine. For example, one or more anomaly events may be detected and classified as one or more separate clusters. In such an approach, output may provide for identifying one or more aspects of an event or events. For example, consider one or more of starting time, ending time, starting depth, and ending depth of an event, which may be performed, for example, by applying one or more post processing techniques.

### Example Machine Learning Model Approach

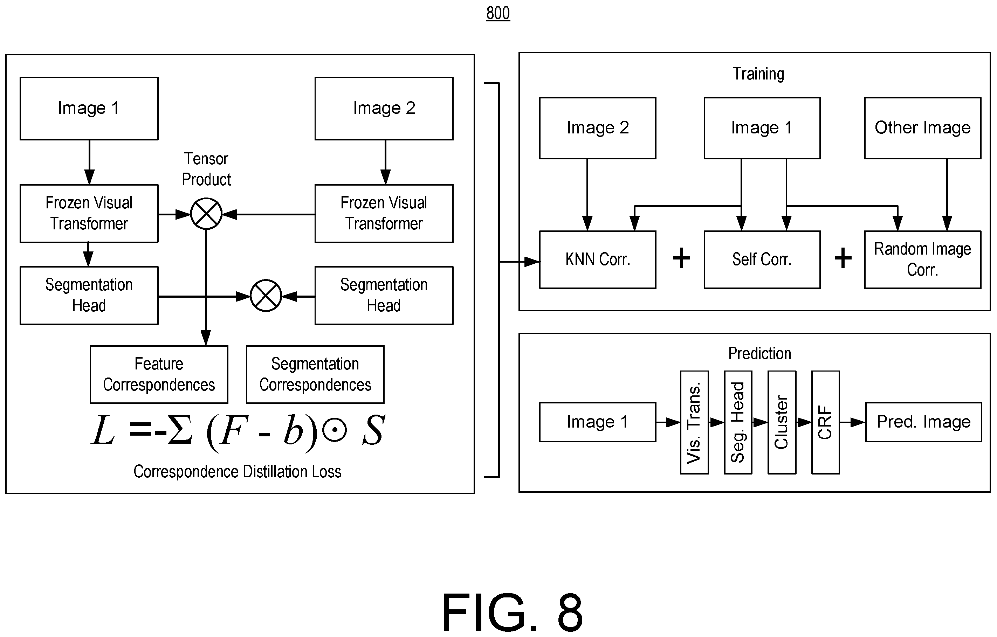

**FIG. 8** shows an example of a machine learning model approach 800. As shown, the approach 800 may involve utilization of one or more features of the STEGO unsupervised segmentation system, which may learn by distilling correspondences between images into a set of class labels using a contrastive loss. For example, STEGO may aim to learn a segmentation that respects induced correspondences between objects. In such an example, to achieve this aim, a system can include training a shallow segmentation network on top of a ViT backbone (e.g., a Distillation with No Labels (DINO) ViT backbone), for example, with a number of contrastive terms (e.g., three in the example) that distill connections between an image and itself, similar images, and random other images, respectively. In such an example, where two regions are strongly coupled by deep features, the system can encourage them to share the same class. As an example, a STEGO approach can utilize a contrastive loss function that encourages features to form relatively compact clusters while preserving their relationships across a corpora.

As an example, a trained ML model may be built that is relatively lightweight for implementation locally such as via an edge framework. In such an example, local monitoring and/or control may be improved when compared to an approach that relies on sophisticated, physics-based simulation as performed using highly parallelized computational resources.

As an example, a data science framework may be implemented (DATAIKU) along with a container framework (DOCKER). Such a container framework may provide for construction of a unit of software that packages up executable code and its dependencies such that an application can execute quickly and reliably from one computing environment to another. As an example, a container can be an image that is a lightweight, standalone, executable package of software that includes code, runtime, system tools, system libraries and settings. A container image becomes a "container" at runtime, for example, when run on a suitable engine (e.g., DOCKER engine for a DOCKER container image). As an example, an edge implementation may utilize a framework such as, for example, a lightweight machine learning framework such as the TENSORFLOW LiteRT (short for Lite Runtime) framework (GOOGLE LLC, Mountain View, California), formerly known as TENSORFLOW LITE, either of which may be referred to as TFL.

As an example, a framework may be implemented using one or more computational devices, systems, etc., which may be operatively coupled via one or more networks (e.g., wired, wireless, etc.). As an example, one or more application programming interfaces (APIs) may be utilized where, for example, a call may be made according to an API where, in response, information is received. For example, consider one or more local and/or remote resources that may provide for use of one or more models that can be called according to one or more APIs. As an example, one or more APIs may be utilized to acquire data, control instructions, etc. As an example, a framework may be implemented using local and/or remote resources where, for example, local resources may include one or more types of edge devices installed locally at a wellsite for one or more wells. As an example, a framework may be implemented using one or more types of circuitry, which may include, for example, embedded circuitry. For example, consider embedding one or more components of a framework in a device, which may be a downhole device or a surface device.

As an example, a system, a method, etc., may utilize one or more machine learning features, which can be implemented using one or more machine learning models. As to types of machine learning models, consider one or more of a support vector machine (SVM) model, a k-nearest neighbors (KNN) model, an ensemble classifier model, a neural network (NN) model, etc. As an example, a machine learning model can be a deep learning model (e.g., deep Boltzmann machine, deep belief network, convolutional neural network, stacked auto-encoder, etc.), an ensemble model (e.g., random forest, gradient boosting machine, bootstrapped aggregation, AdaBoost, stacked generalization, gradient boosted regression tree, CATBoost, etc.), a neural network model (e.g., radial basis function network, perceptron, back-propagation, Hopfield network, etc.), a regularization model (e.g., ridge regression, least absolute shrinkage and selection operator, elastic net, least angle regression), a rule system model (e.g., cubist, one rule, zero rule, repeated incremental pruning to produce error reduction), a regression model (e.g., linear regression, ordinary least squares regression, stepwise regression, multivariate adaptive regression splines, locally estimated scatterplot smoothing, logistic regression, etc.), a Bayesian model (e.g., naïve Bayes, average on-dependence estimators, Bayesian belief network, Gaussian naïve Bayes, multinomial naïve Bayes, Bayesian network), a decision tree model (e.g., classification and regression tree, iterative dichotomiser 3, C4.5, C5.0, chi-squared automatic interaction detection, decision stump, conditional decision tree, M5), a dimensionality reduction model (e.g., principal component analysis, partial least squares regression, Sammon mapping, multidimensional scaling, projection pursuit, principal component regression, partial least squares discriminant analysis, mixture discriminant analysis, quadratic discriminant analysis, regularized discriminant analysis, flexible discriminant analysis, linear discriminant analysis, etc.), an instance model (e.g., k-nearest neighbor, learning vector quantization, self-organizing map, locally weighted learning, etc.), a clustering model (e.g., k-means, k-medians, expectation maximization, hierarchical clustering, etc.), etc.

As an example, a machine model may be built using a computational framework with a library, a toolbox, etc., such as, for example, those of the MATLAB framework (MathWorks, Inc., Natick, Massachusetts). The MATLAB framework includes a toolbox that provides supervised and unsupervised machine learning algorithms, including support vector machines (SVMs), boosted and bagged decision trees, k-nearest neighbor (KNN), k-means, k-medoids, hierarchical clustering, Gaussian mixture models, and hidden Markov models. Another MATLAB framework toolbox is the Deep Learning Toolbox (DLT), which provides a framework for designing and implementing deep neural networks with algorithms, pretrained models, and apps. The DLT provides convolutional neural networks (ConvNets, CNNs) and long short-term memory (LSTM) networks to perform classification and regression on image, time-series, and text data. The DLT includes features to build network architectures such as generative adversarial networks (GANs) and Siamese networks using custom training loops, shared weights, and automatic differentiation. The DLT provides for model exchange various other frameworks.

As an example, a system may utilize one or more recurrent neural networks (RNNs). One type of RNN is referred to as long short-term memory (LSTM), which can be a unit or component (e.g., of one or more units) that can be in a layer or layers. A LSTM component can be a type of artificial neural network (ANN) designed to recognize patterns in sequences of data, such as time series data. When provided with time series data, LSTMs take time and sequence into account such that an LSTM can include a temporal dimension. For example, consider utilization of one or more RNNs for processing temporal data from one or more sources, optionally in combination with spatial data. Such an approach may recognize temporal patterns, which may be utilized for making predictions (e.g., as to a pattern or patterns for future times, etc.).

As an example, the TENSORFLOW framework (Google LLC, Mountain View, CA) may be implemented, which is an open-source software library for dataflow programming that includes a symbolic math library, which can be implemented for machine learning applications that can include neural networks. As an example, the CAFFE framework may be implemented, which is a DL framework developed by Berkeley Al Research (BAIR) (University of California, Berkeley, California). As another example, consider the SCIKIT platform (e.g., scikit-learn), which utilizes the PYTHON programming language. As an example, a framework such as the APOLLO Al framework may be utilized (APOLLO.AI GmbH, Germany). As an example, a framework such as the PYTORCH framework may be utilized (Facebook Al Research Lab (FAIR), Facebook, Inc., Menlo Park, California).

As an example, a training method can include various actions that can operate on a dataset to train a ML model. As an example, a dataset can be split into training data and test data where test data can provide for evaluation. A method can include cross-validation of parameters and best parameters, which can be provided for model training.

The TENSORFLOW framework can run on multiple CPUs and GPUs (with optional CUDA (NVIDIA Corp., Santa Clara, California) and SYCL (The Khronos Group Inc., Beaverton, Oregon) extensions for general-purpose computing on GPUs). TENSORFLOW is available on 64-bit LINUX, MACOS (Apple Inc., Cupertino, California), WINDOWS (Microsoft Corp., Redmond, Washington), and mobile computing platforms including ANDROID (Google LLC, Mountain View, California) and IOS (Apple Inc.) operating system-based platforms.

TENSORFLOW computations can be expressed as stateful dataflow graphs; noting that the name TENSORFLOW derives from the operations that such neural networks perform on multidimensional data arrays. Such arrays can be referred to as "tensors".

As an example, a device and/or distributed devices may utilize TFL or another type of lightweight framework. TFL is a set of tools that enables on-device machine learning where models may run on mobile, embedded, and loT devices. TFL is optimized for on-device machine learning, by addressing latency (no round-trip to a server), privacy (no personal data leaves the device), connectivity (Internet connectivity is demanded), size (reduced model and binary size) and power consumption (e.g., efficient inference and a lack of network connections). TFL can provide multiple platform support, covering ANDROID and iOS devices, embedded LINUX, and microcontrollers. TFL can provide diverse language support, which includes JAVA, SWIFT, Objective-C, C++, and PYTHON. TFL can provide high performance, with hardware acceleration and model optimization.

As explained, DST is a measurement technique that may be implemented in various domains (e.g., oil and gas, geothermal wells, CCS wells, pipeline or infrastructure monitoring and/or control, etc.). DST may provide for capturing relatively high frequency signals. As an example, DST may be utilized to acquire borehole data to monitor micro-seismicity. In various instances, an engineer interprets DST signals and monitors a well through anomaly or other event detection from acquired data. However, DST's high frequency capabilities generally result in relatively large volumes of data acquired real-time, for example, with a frequency that may be of the order of a meter per second, which translates into massive loading of transmission equipment, computing equipment, etc., which may thereby introduce delays and latencies that may confound real-time or near real-time decision making (e.g., detection of events, control, etc.). With a human-in-the-loop (HITL), for managing processing and visualization, time delays may be considerable and prone to subjective human assessments. As explained, through introduction of various types of computing techniques, assessments and/or control actions may be expedited, thereby allowing for improvements in the field, whether through improvements in decision making and/or consistency in decision making. For example, a STEGO or other appropriate machine learning-based approach may provide for consistency from well-to-well, etc., which may thereby enhance data and results for one or more purposes (e.g., further machine learning, etc.). As an example, a system may provide for increased level of automation with less demand on one or more HITLs. As an example, a system may provide for improved memory utilization at a remote site, improved bandwidth demands, etc.

As explained, bandwidth efficiency may be improved by a system, which may employ one or more techniques. For example, filtering and/or selecting data may be employed, which may be automated. As an example, through filtering and/or selecting, data transmission frequency demands may be reduced, reducing the amount of data transmitted, which may lower data transmission costs, and infrastructure costs compared to infrastructure required to handle high volumes of non-image data. In various instances, transmissions may be via satellite, which may be restricted as to bandwidth and/or availability (e.g., time of day, solar activity, etc.). In such instances, a system may provide for more flexible and robust transmissions of imagery generated from DST signals, which, in turn, may provide for improved control of field equipment at one or more sites.

As explained, a system may provide flexibility using one or more features, which may include features of threshold setting (e.g., dimension, resolution, file size, etc.), versatile adaptability for diverse datasets and use cases, etc. As system may provide for relative ease of integration to one or more existing infrastructures with minimal effort, while providing an immediate gain in efficiency.

As explained, a system may be implemented for remote monitoring for one or more types of sites, which may include CCS injection, seismic characterization, etc. As explained, an loT approach and/or local gateway approach may be implemented at a site or sites.

As explained, a system may provide for selective transmission, which may be automatically triggered, for example, responsive to a data assessment. In such an example, image data representing a substantial change in condition may be transmitted, which can reduce demands for unnecessary data transfers. As explained, data reduction may be implemented where compression of datasets into smaller image files may reduce storage and/or transmission demands. As explained, one or more types of machine learning may be employed, which may include supervised and/or unsupervised learning. For example, unsupervised learning may be utilized for automated anomaly/event detection using one or more unsupervised techniques that reduce demands for manual data labeling and/or model updates.

As an example, a system may provide for data compression with data size reduction while retaining image resolution for further analysis. As an example, unsupervised AI/ML anomaly/event detection may be based on selective transmitted images (e.g., without labelling by an engineer, etc.). As an example, a system may reduce demands for travel to and/or from a site, which may reduce risks to humans, wear of equipment, and emissions. As an example, a system may provide for enhanced operational efficiency with faster data transmission and data processing help to accelerate decision making, which may be automated or set at an appropriate level of automation (e.g., as may be automatically set depending on whether or not data are to be transmitted, which, as explained, may depend on detection of one or more anomalies and/or events).

While various examples refer to DAS, as an example, a system such as, for example, the system 500 of **FIG. 5****,** may be utilized for DTS data and/or data from one or more other DSTs. As an example, raw data from fiber optics (e.g., DAS, DTS, etc.) may be selectively transmitted as image data. In such an example, one or more security techniques may be utilized, which may include, for example, image scrambling according to a key or other code. In such an example, image data may be unscrambled at a destination with knowledge of the key or other code. As an example, a compression technique may employ one or more security measures, for example, where compression involves secure encoding and decompression involves secure decoding.

### Example Method and System

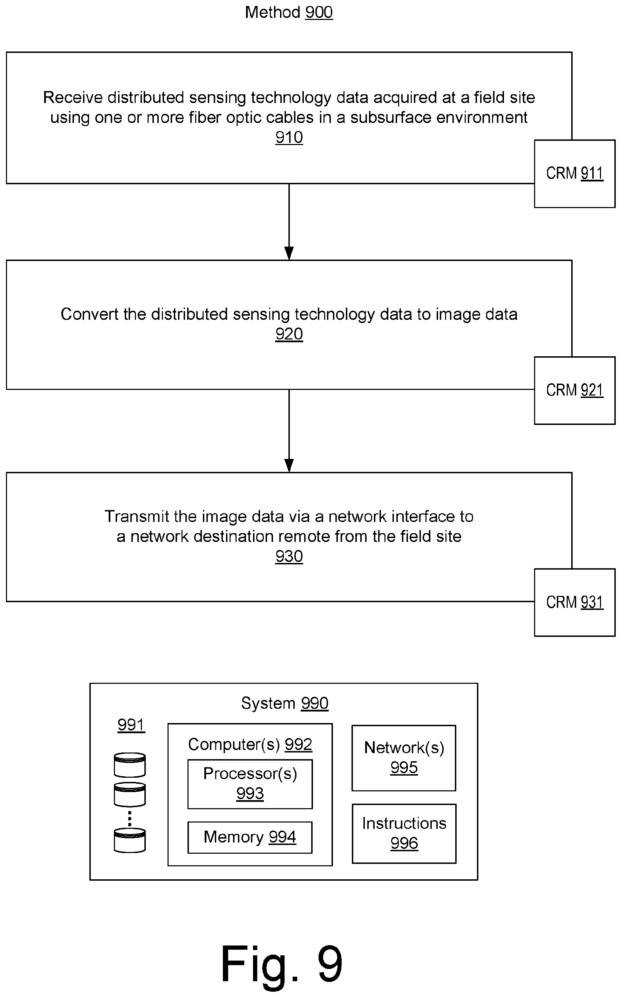

**FIG. 9** shows an example of a method 900 and an example of a system 990. As shown, the method 900 can include a reception block 910 for receiving distributed sensing technology data acquired at a field site using one or more fiber optic cables in a subsurface environment; a conversion block 920 for converting the distributed sensing technology data to image data; and a transmission block 930 for transmitting the image data via a network interface to a network destination remote from the field site.

The method 900 is shown in **FIG. 9** in association with various computer-readable media (CRM) blocks 911, 921, and 931. Such blocks generally include instructions suitable for execution by one or more processors (or processor cores) to instruct a computing device or system to perform one or more actions. While various blocks are shown, a single medium may be configured with instructions to allow for, at least in part, performance of various actions of the method 900. As an example, a computer-readable medium (CRM) may be a computer-readable storage medium that is non-transitory and that is not a carrier wave. As an example, one or more of the blocks 911, 921, and 931 may be in the form processor-executable instructions.

In the example of **FIG. 9****,** the system 990, which may be a wellsite system, can include one or more information storage devices 991, one or more computers 992, one or more networks 995 and instructions 996. As to the one or more computers 992, each computer may include one or more processors (e.g., or processing cores) 993 and memory 994 for storing the instructions 996, for example, executable by at least one of the one or more processors 993 (see, e.g., the blocks 911, 921, and 931). As an example, a computer may include one or more network interfaces (e.g., wired or wireless), one or more graphics cards, a display interface (e.g., wired or wireless), etc.

As an example, a method can include receiving distributed sensing technology data acquired at a field site using one or more fiber optic cables in a subsurface environment; converting the distributed sensing technology data to image data; and transmitting the image data via a network interface to a network destination remote from the field site. In such an example, the distributed sensing technology data can be or include distributed acoustic sensing data and/or can be or include distributed temperature sensing data.

As an example, distributed sensing technology data can correspond to a current time interval where transmitting of image data occurs automatically responsive to performing a comparison between the image data for the current time interval and previously generated image data for one or more prior time intervals. In such an example, the comparison can utilize one or more metrics for determining whether a predetermined type of change exists between the image data for the current time interval and the previously generated image data for the one or more prior time intervals.

As an example, image data can have a data size less than a data size of distributed sensing technology data. In such an example, the data size of the image data can be less than 50 percent of the size of the distributed sensing technology data.

As an example, a network interface may be or include a satellite network interface. As explained, satellite communications may be utilized for remote sites where local infrastructure may be unavailable. In various instances, satellite communications may be costly, limited in bandwidth, limited in time, etc. Through transforming DST data into an image format, such data may be transmitted more effectively.

As an example, a method can include, responsive to transmitting image data, receiving a control instruction by a controller at a site, where the control instruction is executable to cause field equipment to perform an action to mitigate an event detected using the image data.

As an example, a method may include detecting an event at a site using image data and a machine learning model. In such an example, the machine learning model can be or include an unsupervised learning machine learning model. For example, consider an unsupervised learning machine learning model that includes visual transformers and a segmentation head. In such an example, the segmentation head may be operable to generate clusters representative of classes of physical phenomena occurring at the site. In such an example, a class may represent a type of event, which may be normal event, an abnormal event, an event to be further assessed, etc.

As an example, distributed sensing technology data may be acquired at a frequency of at least approximately 0.1 Hz and, for example, transformed image data from the distributed sensing technology data may be formatted using pixel dimensions that depend on the frequency and length of at least one of one or more fiber optic cables. In such an example, pixel dimensions can include a temporal dimension and a spatial dimension.

As an example, one or more fiber optic cables may be or include a fiber optic cable disposed in a well that includes a wellbore that extends into a subsurface environment. In such an example, distributed sensing technology data acquired via one or more fiber optic cables may include one or more of acoustic data and temperature data that correspond to positions along the fiber optic cable disposed in the well. For example, consider spatially distributed acoustic data and spatially distributed temperature data where a spatial distribution corresponds to positions along a respective fiber optic cable.

As an example, image data may be generated using one or more formats. For example, consider an image format with a bit depth of 24 bits, an image format with a bit depth of 8 bits, etc. As an example, an image format may be selected in a manner that may depend on one or more factors. For example, consider available GPU memory and processing power, along with transmission capabilities, resources, etc. As an example, a lower bit depth may be employed for monitoring where responsive to detection of an issue, bit depth may be increased to provide for more detail, which may be a decision that depends on the type of issue. For example, assessments as to various issues, which may be associated with classes, may benefit from an increased bit depth while various other issues may not. Hence, a method may include detecting an issue as a class (e.g., using segmentation, etc.), determining whether further assessment of the issue is desirable, and, if so, determining whether an increase in bit depth may improve further assessment or, for example, determining that time may be of the essence and that a current bit depth suffices or that a bit depth decrease may provide for improved streaming of data to improve further assessment. As explained, an image-based approach to transmission of data may be flexible and adaptable dynamically to improve making data-based assessments, which may provide for improved control of field equipment (e.g., automatically, at an appropriate level of automation, with a HITL, etc.).

As an example, system can include a processor; a memory accessible to the processor; and processor-executable instructions stored in the memory to instruct the system to: receive distributed sensing technology data acquired at a field site using one or more fiber optic cables in a subsurface environment; convert the distributed sensing technology data to image data; and transmit the image data via a network interface to a network destination remote from the field site.

As an example, one or more computer-readable storage media can include processor-executable instructions to instruct a wellsite computing system to: receive distributed sensing technology data acquired at a field site using one or more fiber optic cables in a subsurface environment; convert the distributed sensing technology data to image data; and transmit the image data via a network interface to a network destination remote from the field site.

As an example, a computer program product can include one or more computer-readable storage media that can include processor-executable instructions to instruct a computing system to perform one or more methods and/or one or more portions of a method. Various example methods may be performed in various combinations.

### Example System

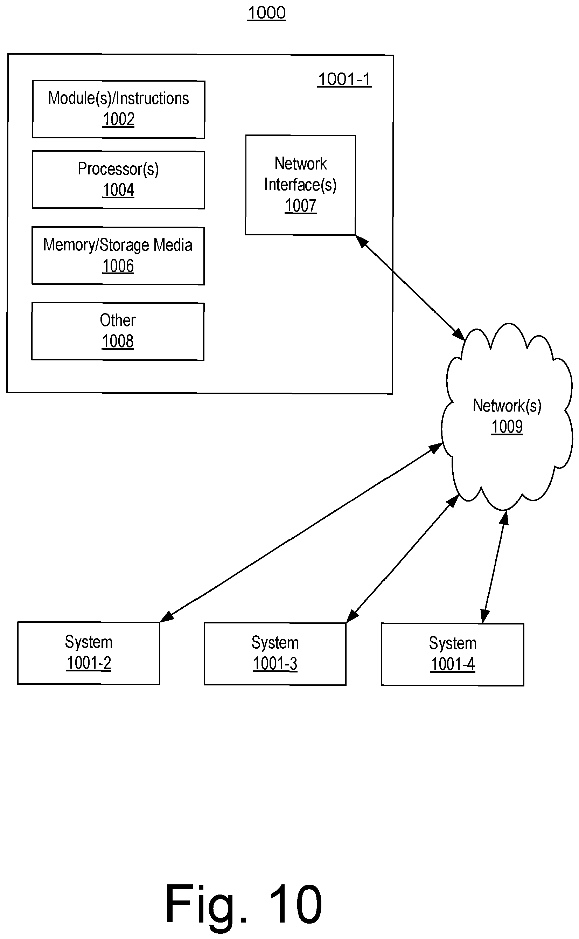

In some embodiments, a method or methods may be executed by a computing system. **FIG. 10** shows an example of a system 1000 that can include one or more computing systems 1001-1, 1001-2, 1001-3, and 1001-4, which may be operatively coupled via one or more networks 1009, which may include wired and/or wireless networks. As shown, the system 1000 can include one or more other components 1008.

As an example, a system can include an individual computer system or an arrangement of distributed computer systems. In the example of **FIG. 10****,** the computer system 1001-1 can include one or more modules 1002, which may be or include processor-executable instructions, for example, executable to perform various tasks (e.g., receiving information, requesting information, processing information, simulation, outputting information, etc.).

As an example, a module may be executed independently, or in coordination with, one or more processors 1004, which is (or are) operatively coupled to one or more storage media 1006 (e.g., via wire, wirelessly, etc.). As an example, one or more of the one or more processors 1004 can be operatively coupled to at least one of one or more network interface 1007. In such an example, the computer system 1001-1 can transmit and/or receive information, for example, via the one or more networks 1009 (e.g., consider one or more of the Internet, a private network, a cellular network, a satellite network, etc.).

As an example, the computer system 1001-1 may receive from and/or transmit information to one or more other devices, which may be or include, for example, one or more of the computer systems 1001-2, etc. A device may be located in a physical location that differs from that of the computer system 1001-1. As an example, a location may be, for example, a processing facility location, a data center location (e.g., server farm, etc.), a rig location, a wellsite location, a downhole location, etc.

As an example, a processor may be or include a microprocessor, microcontroller, processor module or subsystem, programmable integrated circuit, programmable gate array, or another control or computing device.

As an example, the storage media 1006 may be implemented as one or more computer-readable or machine-readable storage media. As an example, storage may be distributed within and/or across multiple internal and/or external enclosures of a computing system and/or additional computing systems.

As an example, a storage medium or storage media may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLUERAY disks, or other types of optical storage, or other types of storage devices.

As an example, a storage medium or media may be located in a machine running machine-readable instructions, or located at a remote site from which machine-readable instructions may be downloaded over a network for execution.

As an example, various components of a system such as, for example, a computer system, may be implemented in hardware, software, or a combination of both hardware and software (e.g., including firmware), including one or more signal processing and/or application specific integrated circuits.

As an example, a system may include a processing apparatus that may be or include a general-purpose processors or application specific chips (e.g., or chipsets), such as ASICs, FPGAs, PLDs, or other appropriate devices.

As an example, a device may be a mobile device that includes one or more network interfaces for communication of information. For example, a mobile device may include a wireless network interface (e.g., operable via IEEE 802.11, ETSI GSM, BLUETOOTH, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A method comprising:
receiving distributed sensing technology data acquired at a field site using one or more fiber optic cables in a subsurface environment;
converting the distributed sensing technology data to image data; and
transmitting the image data via a network interface to a network destination remote from the field site.

2. The method of claim 1, wherein the distributed sensing technology data comprise distributed acoustic sensing data and/or distributed temperature sensing data.

3. The method of claim 1 or 2, wherein the distributed sensing technology data correspond to a current time interval and wherein the transmitting occurs automatically responsive to performing a comparison between the image data for the current time interval and previously generated image data for one or more prior time intervals.

4. The method of claim 3, wherein the comparison utilizes one or more metrics for determining whether a predetermined type of change exists between the image data for the current time interval and the previously generated image data for the one or more prior time intervals.

5. The method of any one of the preceding claims, wherein the image data has a data size less than a data size of the distributed sensing technology data, wherein the data size of the image data preferably is less than 50 percent of the size of the distributed sensing technology data.

6. The method of any one of the preceding claims, wherein the network interface comprises a satellite network interface.

7. The method of any one of the preceding claims, comprising, responsive to the transmitting, receiving a control instruction by a controller at the site, wherein the control instruction is executable to cause field equipment to perform an action to mitigate an event detected using the image data.

8. The method of any one of the preceding claims, comprising detecting an event at the site using the image data and a machine learning model, wherein the machine learning model preferably comprises an unsupervised learning machine learning model.

9. The method of claim 8, wherein the unsupervised learning machine learning model comprises visual transformers and a segmentation head.

10. The method of claim 9, wherein the segmentation head generates clusters representative of classes of physical phenomena occurring at the site.

11. The method of any one of the preceding claims, wherein the distributed sensing technology data are acquired at a frequency of at least approximately 0.1 Hz and wherein the image data are formatted using pixel dimensions that depend on the frequency and length of at least one of the one or more fiber optic cables, wherein the pixel dimensions preferably comprise a temporal dimension and a spatial dimension.

12. The method of any one of the preceding claims, wherein the one or more fiber optic cables comprise a fiber optic cable disposed in a well that comprises a wellbore that extends into the subsurface environment, wherein the distributed sensing technology data preferably comprise one or more of acoustic data and temperature data that correspond to positions along the fiber optic cable disposed in the well.

13. The method of any one of the preceding claims, wherein the image data comprise a bit depth of 24 bits or a bit depth of 8 bits.

14. A system comprising:
a processor;
a memory accessible to the processor; and
processor-executable instructions stored in the memory to instruct the system to perform a method according to any one of the preceding claims.

15. One or more computer-readable storage media comprising processor-executable instructions to instruct a wellsite computing system to perform a method according to any one of the claims 1 - 13.
